# EUROPÄISCHE PATENTSCHRIFT

(11) **EP 1 561 634 B1**
(45) Veröffentlichungstag und Bekanntmachung des Hinweises auf die Patenterteilung: **26.03.2008**
(21) Anmeldenummer: 05002330.8
(22) Anmeldetag: 04.02.2005
(51) Int. Cl.: B60N 2/44

(54) **Versorgungssystem**
Supply system
Système d'alimentation

(30) Priorität: 06.02.2004 DE 102004005843
(43) Veröffentlichungstag der Anmeldung: 10.08.2005
(73) Patentinhaber: ADAM OPEL AG, 65423 Rüsselsheim (DE)
(72) Erfinder: Fries, Armin-Lutz, 64283 Darmstadt (DE); Wilfert, Ralf, 64572 Büttelborn (DE)

(56) Entgegenhaltungen:
- EP-A- 1 080 984
- DE-A1- 3 804 848
- DE-A1- 4 013 275
- DE-A1- 19 806 535
- DE-C1- 3 303 549

## Beschreibung

Die Erfindung betrifft ein Versorgungssystem mit einer aufblasbaren Sitzeinheit eines Kraftfahrzeuges, die mindestens ein Modul mit einer Umhüllung aufweist, wobei die Umhüllung in einer Gebrauchslage mit einem Fluid, insbesondere mit Luft, gefüllt ist und in einer Nichtgebrauchslage fluidlos ist.

Gemäß der DE 198 06 535 C2 ist eine Vorrichtung gemäß dem Oberbegriff des Anspruchs 1 zum automatischen Einstellen des Komforts eines Kraftfahrzeugsitzes beschrieben. Diese Vorrichtung weist hierbei mehrere im Kraftfahrzeugsitz angeordnete fluidfüllbare Basen auf sowie ein Fluiddruckeinstellungssystem, um den Durchgang eines Fluids in ausgewählten Blasen der Blasen hinein oder aus diesen heraus einzustellen. Des Weiteren weist die Vorrichtung einen Druckumformer auf, um Fluidruck innerhalb des Fluiddruckeinstellungssystems um mindestens ein entsprechendes Drucksignal umzuformen, und einen Controller, um das Drucksignal zu empfangen und die Information über die Abmessung des Insassen des Sitzes als eine Funktion des empfangenen Drucksignals abzuschätzen. Einer der Nachteile dieser bekannten Vorrichtung ist, dass durch ein Verschwenken und/oder Verschieben des Lehnenteils und/oder des Sitzteils des Kraftfahrzeugsitzes in eine Nichtgebrauchslage der Sitz trotz fluidloser Blasen soviel Platz innerhalb des Kraftfahrzeuges einnimmt, wodurch das Ladevolumen des Kraftfahrzeuges erheblich eingeschränkt ist. Des Weiteren weist das Versorgungssystem zum Einstellen des Komforts des Kraftfahrzeugsitzes keinen einfachen Aufbau auf, welches sich insbesondere für den Montageaufwand negativ auswirkt.

Zum allgemeinen technischen Verständnis wird noch auf die US 38 04 848 und DE 299 24 138 U1 verwiesen.

Es ist Aufgabe der vorliegenden Erfindung, ein Versorgungssystem mit einer aufblasbare Sitzeinheit bereitzustellen, mit dem die obengenannten Nachteile vermieden werden, insbesondere ein einfaches und kostengünstiges Versorgungssystem geschaffen wird.

Die Aufgabe wird durch ein Versorgungssystem mit den Merkmalen des Anspruchs 1 gelöst. In den abhängigen Ansprüchen sind vorteilhafte Weiterbildungen des erfindungsgemäßen Versorgungssystems angegeben.

Es ist erfindungsgemäß vorgesehen, dass das Modul (Kammer) eine Umhüllung umfasst, in der ein Schaumstoff und ein Verstärkungselement angeordnet sind, welches den Schaumstoff in Nichtgebrauchslage zumindest teilweise aufnimmt. Die Sitzeinheit, die einen Drucksensor umfasst, ist mit einer ein Einlassventil aufweisenden Einströmungsleitung und mit einer ein Auslassventil aufweisende Ausströmungsleitung verbunden. Wird die Luft aus der aufblasbaren Sitzeinheit evakuiert, erreicht das Modul nach einer festgelegten Zeit die Nichtgebrauchslage, wobei sich der Schaumstoff zumindest teilweise in das Verstärkungselement, welches mit einer oder mehreren Vertiefung ausgebildet sein kann, zurückzieht. Die Vertiefung kann entsprechend der Kontur des Schaumstoffes angepasst sein, die der Schaumstoff in Gebrauchslage der aufblasbaren Sitzeinheit einnimmt. Die Kontur der Vertiefung kann beispielsweise spiegelförmig zur Kontur des Schaumstoffes gebildet sein. Vorzugsweise nimmt das evakuierte Modul eine flache Kontur an der Oberfläche ein, so dass sich die Sitzeinheit in Nichtgebrauchslage durch eine kompakte Anordnung auszeichnet. Zweckmäßigerweise ist die erfindungsgemäße Sitzeinheit als Sitzteil und/oder als Lehnenteil eines Kraftfahrzeugsitzes ausgebildet, wobei in Gebrauchslage, d.h. wenn Luft mit einem bestimmten Druck sich innerhalb des Moduls befindet, der Schaumstoff eine dreidimensionale Form (konkav) entsprechend den Design- oder Stylingvorgaben für Sitze aufweist. In einer bevorzugten Ausführungsform der Erfindung weist die aufblasbare Sitzeinheit mehrere Module auf, die am Lehnenteil sowie am Sitzteil angeordnet sein können. Entsprechend den Anforderungen können die Module unterschiedliche dreidimensionale Formen annehmen, welches insbesondere durch den eingesetzten Schaumstoff innerhalb der Umhüllung des jeweiligen Moduls erzielt wird. Durch beispielsweise eine Betätigung einer Tasteinheit kann der Lufteinströmvorgang gestartet werden. Hierbei wird das Einlassventil geöffnet und Luft kann in die Sitzeinheit, insbesondere in jedes Modul, einströmen. Ist der Umgebungsdruck innerhalb des Moduls erreicht, schließt das Versorgungssystem das Einlassventil. Der Drucksensor, der an der Sitzeinheit angeordnet ist, überprüft hierbei den innerhalb des Moduls vorliegenden Luftdruck.

Der Evakuierungsvorgang (Luftausströmvorgang aus der Sitzeinheit) kann beispielsweise durch eine Betätigung einer weiteren Tasteinheit initiiert werden. Hierbei ist an der Ausströmungsleitung vorzugsweise eine Vakuumpumpe angeordnet. Diese Vakuumpumpe erzeugt einen Unterdruck in der Ausströmungsleitung, der nach Öffnen des Auslassventils die Sitzeinheit, insbesondere jedes Modul, kollabieren lässt. Im evakuierten Zustand ist die Sitzeinheit volumenmäßig erheblich reduziert, wodurch eine große Ladefläche innerhalb des Kraftfahrzeuges entsteht.

In einer weiteren Ausführungsform der Erfindung kann das Versorgungssystem mit einem Kompressor ausgebildet sein. Der Kompressor kann hierbei an der Einströmungsleitung angeordnet sein. Die Sitzeinheit ist vorzugsweise über eine Druckmindereinheit, die beispielsweise eine Drossel sein kann, mit dem Kompressor verbunden. Der eingesetzte Kompressor beschleunigt hierbei das Füllen der aufblasbaren Sitzeinheit, insbesondere der einzelnen Module. Des Weiteren kann ein definierter Druck, oberhalb des Umgebungsdruckes, unter Verwendung der Druckmindereinheit voreingestellt werden. Hierdurch wird erreicht, dass die erfindungsgemäße Sitzeinheit nicht mit einem zu hohen Druck belastet wird, wodurch schlimmstenfalls die Sitzeinheit zerstört werden könnte. Durch eine derartige Ausgestaltung wird einerseits der Sitzkomfort der aufblasbaren Sitzeinheit gewährleistet andererseits eine Überlastung derselben vorgebeugt. Zweckmäßigerweise weist das Versorgungssystem eine Entlüftungseinheit, insbesondere ein Entlüftungsventil, auf, das beispielsweise an der Einströmungsleitung angeordnet ist. Das Entlüftungsventil kann hierbei das Versorgungssystem aus Sicherheitsgründen drucklos schalten, welches beispielsweise durchgeführt wird, wenn das Kraftfahrzeug verschlossen ist bzw. sich nicht im Betriebszustand befindet. In einer Ausführungsform der Erfindung kann die verwendete Drossel beispielsweise mechanisch einstellbar sein. Es sind selbstverständlich alternative Druckmindereinheiten innerhalb des Versorgungssystem einsetzbar.

In einer weiteren Ausführungsform der Erfindung weist das erfindungsgemäße Versorgungssystem eine kombinierte Kompressor-/Vakuumpumpe auf, wodurch insbesondere Package-Vorteile erzielt werden. Des Weiteren ist die Einströmungsleitung mit einem Drucktank und/oder die Ausströmungsleitung mit einem Vakuumtank verbunden. Die innerhalb des Drucktanks gespeicherte Luft kann beispielsweise über die Druckmindereinheit in die aufblasbare Sitzeinheit geleitet werden. Einer der Vorteile einer Anordnung eines Drucktankes innerhalb dieses erfindungsgemäßen Versorgungssystems ist, dass der Einströmungsvorgang der Luft in die jeweiligen Module der Sitzeinheit unter eine erheblichen Geräuschreduzierung erfolgt. Die kombinierte Kompressor-/Vakuumpumpe kann beispielsweise nur dann aktiviert werden, wenn ein bestimmter Versorgungsdruck unterschritten bzw. überschritten wird. Mittels der bereitgestellten Volumina im Drucktank und/oder Vakuumtank sind mehrere Zyklen ohne Pumpenunterstützung möglich.

In einer weiteren Ausgestaltung des Versorgungssystems kann es durchaus sinnvoll sein, die Sitzeinheit mit einem zusätzlichen Ablassventil zu verbinden. Wird beispielsweise die Sitzeinheit, insbesondere die Module mit einem erhöhten Luftdruck beaufschlagt, der beispielsweise über 1,3 bar liegen kann, kann eine schnelle Evakuierung über das Ablassventil erfolgen. Ein weiterer Vorteil ist, dass der Vakuumtank in Bezug auf sein Volumen kleiner ausgelegt werden kann.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: ein erfindungsgemäßes Versorgungssystem mit einer aufblasbaren Sitzeinheit bestehend aus einem Sitzteil und einem Lehnenteil,
- Fig.2: eine alternative Ausführungsform des Versorgungssystems,
- Fig.3: eine weitere alternative Ausführungsform des Versorgungssystems,
- Fig.4: eine weitere Alternative des Versorgungssystems,
- Fig.5: eine aufblasbare Sitzeinheit mit einem Sitzteil und einem Lehnenteil und
- Fig.6: eine Schnittansicht einer Ausführungsform einer aufblasbaren Sitzeinheit.

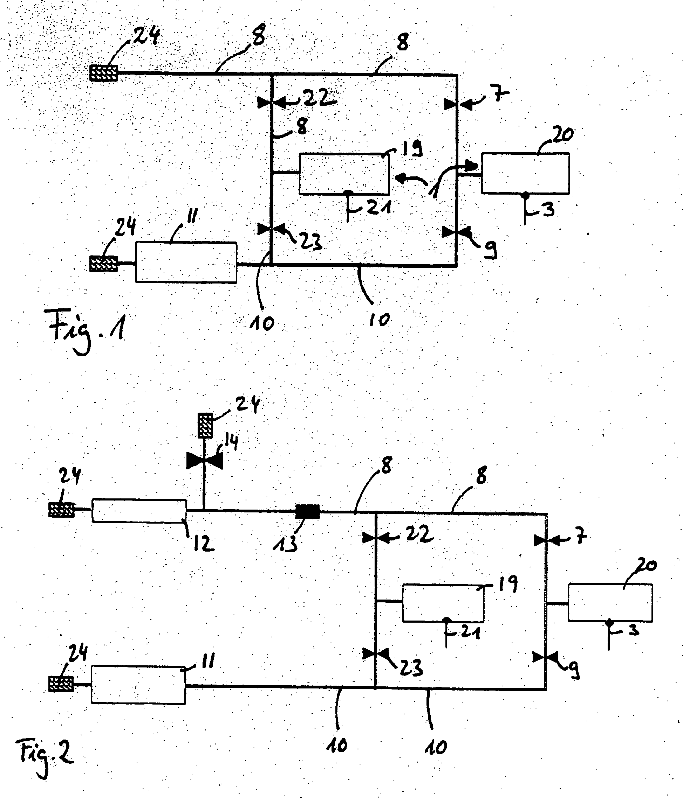

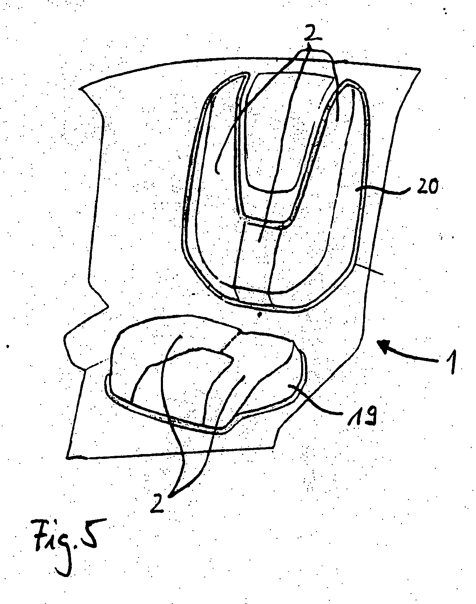

Fig.1 zeigt eine Ausführungsform eines Versorgungssystems, welches eine aufblasbare Sitzeinheit 1, wie sie beispielhaft in Fig.5 gezeigt ist, mit einem Fluid, insbesondere mit Luft, versorgt. Wie Fig.5 zeigt, weist die aufblasbare Sitzeinheit 1 ein Sitzteil 19 und ein Lehnenteil 20 auf, die jeweils mit einzelnen Modulen 2 (Luftkammern) ausgestattet sind. Diese Module 2 sind in einer Gebrauchslage mit Luft gefüllt und in einer Nichtgebrauchslage fluidlos. Das Lehnenteil 20 ist hierbei mit einem Drucksensor 3 und das Sitzteil 19 mit einem Drucksensor 21 verbunden. Über eine Einströmungsleitung 8 kann das Sitzteil 19 bzw. das Lehnenteil 20 mit Luft versorgt werden. Die Einströmungsleitung 8 weist im vorliegenden Ausführungsbeispiel vor dem Sitzteil 19 sowie vor dem Lehnenteil 20 jeweils ein Einlassventil 7, 22 auf.

Die Evakuierung der Luft erfolgt über eine Ausströmungsleitung 10. Hinter dem Sitzteil 19 sowie hinter dem Lehnenteil 20 weist die Ausströmungsleitung 10 jeweils ein Auslassventil 9, 23 auf. Des Weiteren ist das Versorgungssystem an der Ausströmungsleitung 10 mit einer Vakuumpumpe 11 ausgestattet. Diese in Fig.1 dargestellte Ausführungsform stellt eine einfache Variante des erfindungsgemäßen Versorgungssystems dar. Durch Betätigen einer Taste, die nicht dargestellt ist, wird der Lufteinströmungsvorgang in die aufblasbare Sitzeinheit 1, insbesondere in das Sitzteil 19 sowie in das Lehnenteil 20, gestartet. Hierbei öffnet das Versorgungssystem die Einlassventile 7, 22, wobei Luft durch die Einströmungsleitung 8 in die jeweiligen Module 2 einströmt. Der Einströmungsvorgang dauert solange, bis der Umgebungsdruck innerhalb der Module 2 erreicht ist. Drucksensoren 3, 21 ermitteln hierbei den innerhalb der Module 2 vorliegenden Druck. Ermitteln die Drucksensoren 3, 21, dass innerhalb der Module 2 der Umgebungsdruck erreicht ist, werden die Einlassventile 7, 22 des Lehnenteils 20 bzw. des Sitzteils 19 geschlossen. Die aufblasbare Sitzeinheit 1 des Kraftfahrzeuges befindet sich dann in einem Betriebszustand. Die Einströmungsleitung 8 und die Ausströmungsleitung 10 bezüglich des Sitzteils 19 und des Lehnenteils 20 sind in den dargestellten Ausführungsbeispielen hierbei parallel geführt.

Durch Betätigen einer weiteren, nicht dargestellten Tasteinheit kann eine Evakuierung der Luft aus der Sitzeinheit 1 gestartet werden. Hierbei werden die Auslassventile 9, 23 geöffnet, wobei gleichzeitig die Vakuumpumpe 11 einen Unterdruck innerhalb der Ausströmungsleitung 10 bildet und somit der Sitzeinheit 1 die Luft entzieht. Im evakuierten Zustand der aufblasbaren Sitzeinheit 1 bildet diese in der vorliegenden Erfindung eine ebene Ladefläche. Der Einlassbereich der Einströmungsleitung 8 sowie der Auslassbereich der Ausströmungsleitung 10 sind in den vorliegenden Ausführungsformen der Erfindung mit einem Filter 24 ausgestattet. Hierdurch wird bezweckt, dass kein Staub bzw. keine Fremdkörper in das Versorgungssystem bzw. in die einzelnen Module 2 gelangen. Der Filter 124 arbeitet ebenfalls als Schalldämpfer.

Die in Fig.1 dargestellte, selbst aufblasbare Sitzeinheit 1 weist jedoch innerhalb der Module 2 lediglich einen Luftdruck auf, der im Wesentlichen dem Umgebungsdruck entspricht. Um eine höhere Härte der einzelnen Module 2 zu erreichen, kann beispielsweise eine Kompressoreinheit 12 an der Einströmungsleitung 8 angeordnet werden. Des Weiteren ist eine Druckmindereinheit 13 in Form einer Drossel zwischen dem Kompressor 12 und dem Sitzteil 19 bzw. dem Lehnenteil 20 angeordnet. Ferner ist zwischen der Druckmindereinheit 13 und dem Kompressor 12 ein Entlüftungsventil 14 vorgesehen. Durch den eingesetzten Kompressor 12 wird das Befüllen des Sitzteils 19 und des Lehnenteils 20 wesentlich beschleunigt. Darüber hinaus kann jedes Modul 2 mit einem Druck beaufschlagt werden, der über Umgebungsdruck liegt. Die einzelnen Module 2 sind hierbei mit unterschiedlichen Druckhärten beaufschlagbar. Während des Lufteinströmvorgangs sind die Einlassventile 7, 22 geöffnet, wobei der Kompressor 12 durch die Einströmungsleitung 8 über den Druckminderer 13 Luft mit einem bestimmten Druck in die Module 2 befördert. Ist der gewünschte Druck innerhalb der einzelnen Module 2 erreicht, schaltet sich der Kompressor 12 ab. Der gewünschte Druck innerhalb der Module 2 kann beispielsweise durch eine mechanische einstellbare Drossel als Druckmindereinheit 13 eingestellt werden. Alternative Druckmindereinheiten 13 sind ebenfalls innerhalb dieses Versorgungssystems einsetzbar. Über ein Öffnen des Entlüftungsventils 14 schaltet das Versorgungssystem aus Sicherheitsgründen die Einströmungsleitung 8 drucklos.

Die Evakuierung von Luft aus den Modulen 2 erfolgt, wie bereits in Fig.1 dargestellt, in dem das System die Vakuumpumpe 17 aktiviert und gleichzeitig die Auslassventile 9, 23 öffnet. Hierdurch wird die in der Sitzeinheit 1 sich befindende Luft über die Ausströmungsleitung 10 in die Umgebung geleitet.

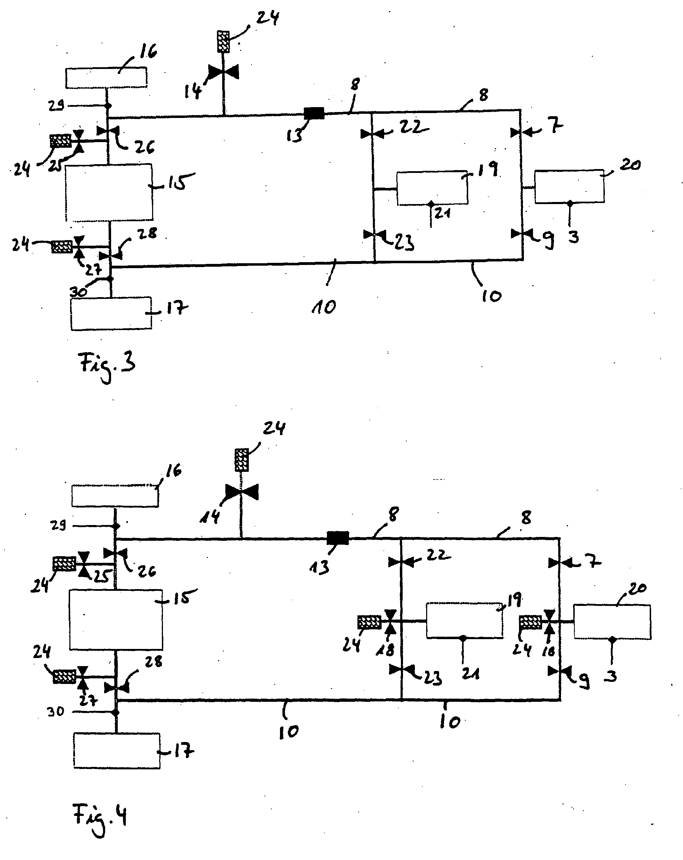

Fig.3 und Fig.4 zeigen weitere Alternativen des erfindungsgemäßen Versorgungssystems, wobei im Folgenden nur auf die Unterschiede eingegangen wird. Gemäß Fig.3 ist eine kombinierte Kompressor-/Vakuumpumpe 15 angeordnet, die sowohl über die Einströmungsleitung 8 Luft mit einem bestimmten Druck in die aufblasbare Sitzeinheit 1 befördern kann als auch während des Evakuierungsvorgangs Luft aus den einzelnen Modulen 2 über die Ausströmungsleitung 10 herauspumpt. Der Einsatz einer kombinierten Kompressor-/Vakuumpumpe 15 bedingt eine Steuerung der Luftwege. Hierzu sind vier Ventile 25, 26, 27, 28 am Versorgungssystem angeordnet. Des Weiteren ist die Einströmungsleitung 8 mit einem Drucktank 16 und die Ausströmungsleitung 10 mit einem Vakuumtank 17 verbunden. Zum Befüllen des Drucktankes 16 sind die Ventile 26, 27 geöffnet und die Ventile 25 und 28 geschlossen. Beim Evakuieren der Luft aus der Sitzeinheit 1 sind die Schaltzustände der Ventile 25, 26, 27, 28 genau umgekehrt.

Ferner ist am Drucktank 16 ein Drucktanksensor 29 und am Vakuumtank 17 ein Vakuumtanksensor 30 angeordnet. Mittels dieser Drucksensoren 29, 30 können auf der Über- bzw. auf der Unterdruckseite die Versorgungsdrücke in einem definierten Druckfenster geregelt werden. Das Versorgungssystem kann gemäß Fig.3 das Sitzteil 19 und das Lehnenteil 20 wahlweise über den Drucktank 16 und/oder über die kombinierte Kompressorvakuumpumpe 15 versorgen. Der Evakuierungsvorgang kann entsprechend über den Vakuumtank 17 und/oder über die kombinierte Kompressor-/Vakuumpumpe 15 erfolgen. Die Kompressor-/Vakuumpumpe 15 kann beispielsweise unterhalb des Fahrzeugbodens angeordnet werden. Der Vakuumtank 17 sowie der Drucktank 16 sind des Weiteren an diversen Stellen des Kraftfahrzeuges anordenbar. Der Vakuumtank 17 kann beispielsweise funktionsintegriert eine Fahrzeugsitzkonsole bilden.

In Fig.4 ist im Wesentlichen ein Versorgungssystem gemäß Fig.3 dargestellt. Der Unterschied ist jedoch, dass sowohl das Sitzteil 19 als auch das Lehnenteil 20 mit einem Ablassventil 18 verbunden sind. Durch Öffnen des Ablassventils 18 kann eine schnellere Evakuierung der Sitzeinheit 1, insbesondere der einzelnen Module 2, erfolgen. Hierbei strömt die Luft aus den einzelnen Modulen 2 über das Ablassventil 18 in die Umgebung. Bei dieser Ausführungsform der Erfindung ist des Weiteren ein kleinerer, in Bezug auf das Volumen ausgestalteter Vakuumtank 17 als in Fig.3 einsetzbar.

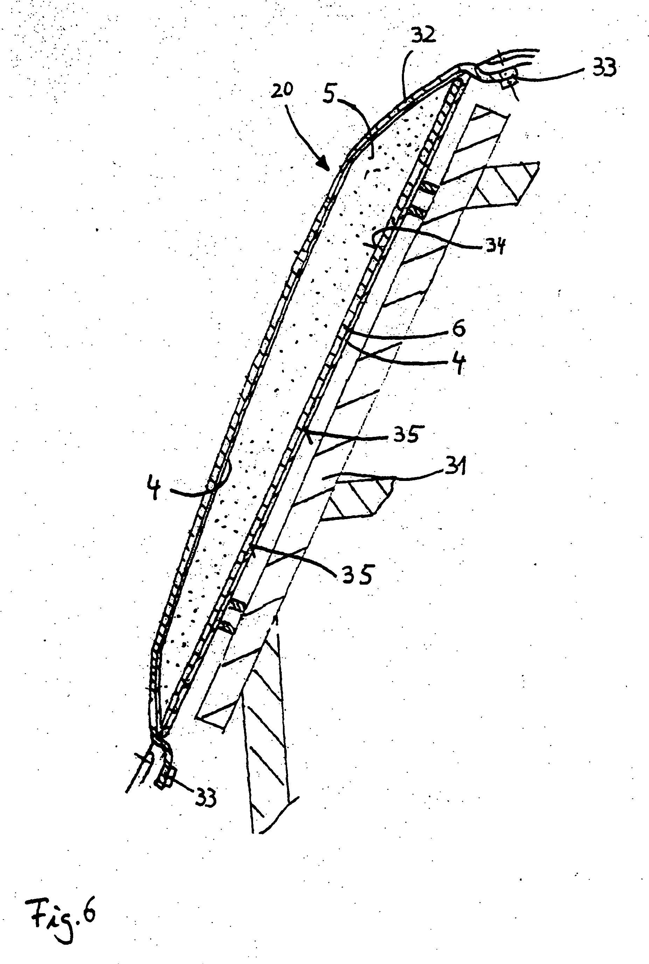

Fig.6 zeigt eine Schnittansicht der aufblasbaren Sitzeinheit 1, die an einem Trägerelement 31 befestigt ist. Das Trägerelement 31 ist in einem bestimmten Winkel geneigt ausgerichtet und stellt exemplarisch das Lehnenteil 20 eines Kraftfahrzeugsitzes dar. Gemäß Fig.4 umfasst die Sitzeinheit 1 mehrere Module 2, in die Luft geleitet werden kann, um eine Gebrauchslage, das bedeutet eine gewünschte Sitzfläche oder eine Anlehnfläche zu erhalten. Falls der Raum innerhalb des Kraftfahrzeuges anderweitig genutzt werden soll, beispielsweise für einen Transport, wird die Luft aus der aufblasbaren Sitzeinheit 1, insbesondere aus allen Modulen 2 entnommen, so dass die aufblasbare Sitzeinheit 1 in Nichtgebrauchslage des Sitzes 1 ein minimales Volumen einnimmt. Das Modul 2 weist gemäß Fig.6 eine Umhüllung 4 auf, die im vorliegenden Ausführungsbeispiel eine Kunststofffolie ist. Innerhalb der Umhüllung 4 ist ein Verstärkungselement 6 aus Metall und ein Schaumstoff 5 angeordnet. Die Umhüllung 4 umfasst somit das Verstärkungselement 6 sowie den Schaumstoff 5. Das Verstärkungselement 6 ist des Weiteren mit Vertiefungen, die nicht dargestellt sind, ausgebildet, in die der Schaumstoff 5 in Nichtgebrauchslage, d.h. wenn die Luft aus der erfindungsgemäßen Sitzeinheit 1 vollständig evakuiert ist, zumindest teilweise aufgenommen ist. In Gebrauchslage weist der Schaumstoff 5 eine dreidimensionale Form (konkav) auf. Die geometrische Form der Vertiefung ist erfindungsgemäß dieser dreidimensionalen Form angepasst, so dass im evakuierten Zustand die Form des Schaumstoffes 5 zuverlässig von der oder von den Vertiefungen aufgenommen werden kann. Auf der Außenseite der Umhüllung 4 liegt ein Bezugsstoff 32 an, der randseitig an der Verkleidung durch eine Schraubenverbindung 33 fixiert ist. Das Verstärkungselement 6 ist mit einer ersten Seite 34 und einer zweiten Seite 35 ausgebildet, wobei die zweite Seite 35 dem Schaumstoff 5 abgewandt ist. Der Schaumstoff 5 ist im dargestellten Ausführungsbeispiel an der Innenwandung der Umhüllung 4 verklebt. Die zweite Seite 35 des Verstärkungselements 6 ist des Weiteren mit der Umhüllung 4 verklebt. Andere Verbindungsmöglichkeiten sind selbstverständlich denkbar.

Zur Steuerung des Druckes innerhalb des jeweiligen Moduls 2 kann ein Steuergerät (nicht dargestellt) vorgesehen sein, dass die notwendige Druckverteilung über Steuerventile regelt. Über das Steuergerät kann der Druck innerhalb der Module 2 so gesteuert werden, dass der Komfort beispielsweise gewichts- oder fahrsituationsabhängig beeinflusst werden kann. Insbesondere kann zum Beispiel bei Kurvenfahrten das kurvenäußere Modul 2 der erfindungsgemäßen Sitzeinheit 1 mit einem höheren Druck beaufschlagt werden als das kurveninnere Modul 2, so dass auf diese Weise eine aufrechte Sitzposition des Insassen begünstigt werden kann. Weiterhin können Ermüdungserscheinungen bei längeren Fahrten durch eine Massagefunktion, bei der das Steuergerät Druckvariationen in den einzelnen Modulen 2 bewirkt, vorgebeugt werden.

In der in Fig.6 dargestellten Ausführungsform ist die Umhüllung 4 als eine Folie ausgebildet, die aus Kunststoff, insbesondere aus Polyurethan besteht. Die Folie 4 kann hierbei elastische oder auch weniger elastische Eigenschaften aufweisen. Die zweite Seite 35 des Verstärkungselements 6 liegt hierbei unmittelbar an der Umhüllung 4 an, wobei die erste Seite 34 dem Schaumstoff 5 zugewandt ist. Zweckmäßigerweise ist der Schaumstoff 5 offenporig ausgebildet, damit beim Evakuieren des jeweiligen Moduls 2 die Luft möglichst schnell aus den Hohlkammern bzw. Poren des Schaumstoffes 5 entweichen kann. Der Schaumstoff 5 kann beispielsweise ein Polyurethan sein oder aus einem Material bestehen, welches gute Luftevakuierungseigenschaften aufweist.

### Bezugszeichenliste

- 1: Sitzeinheit
- 2: Modul
- 3: Drucksensor
- 4: Umhüllung
- 5: Schaumstoff
- 6: Verstärkungselement
- 7: Einlassventil
- 8: Einströmungsleitung
- 9: Auslassventil
- 10: Ausströmungsleitung
- 11: Vakuumpumpe
- 12: Kompressor
- 13: Druckmindereinheit
- 14: Entlüftungseinheit
- 15: kombinierte Kompressor-/Vakuumpumpe
- 16: Drucktank
- 17: Vakuumtank
- 18: Ablassventil
- 19: Sitzteil
- 20: Lehnenteil
- 21: Drucksensor
- 22: Einlassventil
- 23: Auslassventil
- 24: Filtereinheit
- 25: Ventil
- 26: Ventil
- 27: Ventil
- 28: Ventil
- 29: Drucktanksensor
- 30: Vakuumtanksensor
- 31: Trägerelement
- 32: Bezugsstoff
- 33: Schraubenverbindung
- 34: erste Seite des Verstärkungselements
- 35: zweite Seite des Verstärkungselements

## Patentansprüche

1. Versorgungssystem mit einer aufblasbaren Sitzeinheit (1) eines Kraftfahrzeuges, die mindestens ein Modul (2) mit einer Umhüllung (4) aufweist, wobei die Umhüllung (4) in einer Gebrauchslage mit einem Fluid, insbesondere mit Luft, gefüllt ist und in einer Nichtgebrauchslage fluidlos ist, **dadurch gekennzeichnet, dass** in der Umhüllung (4) ein Schaumstoff (5) und ein Verstärkungselement (6) angeordnet sind, welches den Schaumstoff (5) in Nichtgebrauchslage zumindest teilweise aufnimmt, wobei die einen Drucksensor (3,21) umfassende Sitzeinheit (1) mit einer ein Einlassventil (7,22) aufweisenden Einströmungsleitung (8) und mit einer ein Auslassventil (9,23) aufweisenden Ausströmungsleitung (10) verbunden ist.

2. Versorgungssystem nach Anspruch 1, **dadurch gekennzeichnet, dass** an der Ausströmungsleitung (10) eine Vakuumpumpe (11) angeordnet ist.

3. Versorgungssystem nach Anspruch 1 oder 2, **dadurch gekennzeichnet, dass** die Einströmungsleitung (8) einen Kompressor (12) aufweist.

4. Versorgungssystem nach Anspruch 3, **dadurch gekennzeichnet, dass** der Kompressor (12) über eine Druckmindereinheit (13) mit der Sitzeinheit (1) verbunden ist.

5. Versorgungssystem nach Anspruch 4, **dadurch gekennzeichnet, dass** die Druckmindereinheit (13) eine Drossel ist.

6. Versorgungssystem nach einem der genannten Ansprüche, **dadurch gekennzeichnet, dass** die Einströmungsleitung (8) eine Entlüftungseinheit (14) aufweist.

7. Versorgungssystem nach einem der genannten Ansprüche, **dadurch gekennzeichnet durch** eine kombinierte Kompressor-/Vakuumpumpe (15).

8. Versorgungssystem nach einem der genannten Ansprüche, **dadurch gekennzeichnet, dass** die Einströmungsleitung (8) mit einem Drucktank (16) und/oder die Ausströmungsleitung (10) mit einem Vakuumtank (17) verbunden ist.

9. Versorgungssystem nach einem der genannten Ansprüche, **dadurch gekennzeichnet, dass** die Sitzeinheit (1) ein Ablassventil (18) aufweist.

10. Versorgungssystem nach einem der genannten Ansprüche, **dadurch gekennzeichnet, dass** die Sitzeinheit (1) ein Sitzteil (19) und ein Lehnenteil (20) umfasst.

11. Versorgungssystem nach einem der genannten Ansprüche, **dadurch gekennzeichnet, dass** die Umhüllung (4) eine Kunststofffolie ist.

12. Versorgungssystem nach einem der genannten Ansprüche, **dadurch gekennzeichnet, dass** der Schaumstoff (5) offenporig ausgebildet ist.

13. Kraftfahrzeug mit einem Versorgungssystem nach einem der genannten Ansprüche.

## Claims

1. Supply system with an inflatable seat unit (1) of a motor vehicle, which seat unit (1) has at least one module (2) with a cover (4), the cover (4) being filled with a fluid, in particular with air, in an in-use disposition and being without fluid in an out-of-use disposition, **characterised in that** positioned in the cover (4) are a foamed material (5) and a reinforcing element (6) which receives at least part of the foamed material (5) in the out-of-use disposition, the seat unit (1) which comprises a pressure sensor (3, 21) being connected to an inflow line (8) having an inlet valve (7, 22) and to an outflow line (10) having an outlet valve (9, 23).

2. Supply system according to claim 1, **characterised in that** a vacuum pump (11) is positioned on the outflow line (10).

3. Supply system according to claim 1 or 2, **characterised in that** the inflow line (8) has a compressor (12).

4. Supply system according to claim 3, **characterised in that** the compressor (12) is connected to the seat unit (1) by means of a pressure reducing unit (13).

5. Supply system according to claim 4, **characterised in that** the pressure reducing unit (13) is a choke.

6. Supply system according to any one of the preceding claims, **characterised in that** the inflow line (8) has a venting unit (14).

7. Supply system according to any one of the preceding claims, **characterised by** a combined compressor/vacuum pump (15).

8. Supply system according to any one of the preceding claims, **characterised in that** the inflow line (10) is connected to a pressure tank (16) and/or the outflow line (10) is connected to a vacuum tank (17).

9. Supply system according to any one of the preceding claims, **characterised in that** the seat unit (1) has a discharge valve (18).

10. Supply system according to any one of the preceding claims, **characterised in that** the seat unit (1) comprises a seat part (19) and a backrest part (20).

11. Supply system according to any one of the preceding claims, **characterised in that** the cover (4) is a plastics material film.

12. Supply system according to any one of the preceding claims, **characterised in that** the foamed material (5) is of an open-pore configuration.

13. Motor vehicle having a supply system according to any one of the preceding claims.

## Revendications

1. Système d'alimentation comprenant une unité de siège (1) gonflable d'un véhicule automobile, qui présente au moins un module (2) avec une enveloppe (4), l'enveloppe (4) étant remplie dans une position d'utilisation avec un fluide, en particulier avec de l'air, et étant sans fluide dans une position de non-utilisation, **caractérisé en ce que** dans l'enveloppe (4) sont disposés une matière alvéolaire (5) et un élément de renfort (6), lequel tient au moins partiellement la matière alvéolaire (5) dans la position de non-utilisation, et **en ce que** l'unité de siège (1) comprenant un capteur de pression (3, 21) est reliée à une conduite d'admission (8) présentant une valve d'entrée (7, 22) et une conduite d'évacuation (10) présentant une valve de sortie (9, 23).

2. Système d'alimentation selon la revendication 1, **caractérisé en ce qu'**une pompe à vide (11) est disposée sur la conduite d'évacuation (10).

3. Système d'alimentation selon la revendication 1 ou 2, **caractérisé en ce que** la conduite d'admission (8) comporte un compresseur (12).

4. Système d'alimentation selon la revendication 3, **caractérisé en ce que** le compresseur (12) est relié par une unité réductrice de pression (13) à l'unité de siège (1).

5. Système d'alimentation selon la revendication 4, **caractérisé en ce que** l'unité réductrice de pression (13) est un étranglement.

6. Système d'alimentation selon l'une des revendications précédentes, **caractérisé en ce que** la conduite d'admission (8) présente une unité de purge (14).

7. Système d'alimentation selon l'une des revendications précédentes, **caractérisé par** un ensemble combiné compresseur/pompe à vide (15).

8. Système d'alimentation selon l'une des revendications précédentes, **caractérisé en ce que** la conduite d'admission (8) est reliée à un réservoir de pression (16) et/ou la conduite d'évacuation (10) est reliée à un réservoir de dépression (17).

9. Système d'alimentation selon l'une des revendications précédentes, **caractérisé en ce que** l'unité de siège (1) comporte une valve de sortie (18).

10. Système d'alimentation selon l'une des revendications précédentes, **caractérisé en ce que** l'unité de siège (1) comporte une partie de siège (19) et une partie de dossier (20).

11. Système d'alimentation selon l'une des revendications précédentes, **caractérisé en ce que** l'enveloppe (4) est une feuille de matière plastique.

12. Système d'alimentation selon l'une des revendications précédentes, **caractérisé en ce que** la matière alvéolaire (5) est réalisée à pores ouverts.

13. Véhicule automobile équipé d'un système d'alimentation selon l'une des revendications précédentes.
